## Europäisches Patentamt

## European Patent Office

## Office européen des brevets

(11) Publication number: **0 063 453**

**B1**

(12) **EUROPEAN PATENT SPECIFICATION**

(45) Date of publication of patent specification: **02.01.86**

(51) Int. Cl.⁴: **F 16 D 69/02**

(21) Application number: **82301856.9**

(22) Date of filing: **07.04.82**

(54) Improvements in and relating to action linings.

(30) Priority: **10.04.81 GB 8111359**

(43) Date of publication of application:
**27.10.82 Bulletin 82/43**

(45) Publication of the grant of the patent:
**02.01.86 Bulletin 86/01**

(84) Designated Contracting States:
**AT BE CH DE FR IT LI LU NL SE**

(56) References cited:
**FR-A-2 379 563**
**GB-A-2 033 443**
**GB-A-2 039 557**
**US-A-3 743 069**
**US-A-4 118 528**

(73) Proprietor: **FERODO LIMITED**
**20 St. Mary's Parsonage**
**Manchester M3 2NL (GB)**

(72) Inventor: **Bartram, David Trevor**
**28 Spinnerbottom**
**Birch Vale Stockport Cheshire (GB)**
Inventor: **Bridge, Malcolm**
**3 Heather Bank**
**Littleborough Lancs (GB)**
Inventor: **Huggett, Ralph**
**28 Harridge Avenue**
**Shawclough Rochdale Lancs (GB)**

(74) Representative: **Hadfield, Robert Franklin et al**
**PO Box 20 Ashburton Road West Trafford Park**
**Manchester M17 1RA (GB)**

Courier Press, Leamington Spa, England.

# 0 063 453

**Description**

This invention relates to friction linings made from glass yarns, for example clutch facings and friction linings incorporating woven fabrics.

Clutch facings of wound construction may be manufactured by impregnating yarns with a solution of a thermosetting resin or vulcanisable elastomer, drying to remove excess solvent and then winding to produce an annular shaped facing preform. The resin or elastomer binding agent may be hardened or cured by the application of heat and pressure to the facing preform enclosed in a suitably shaped die. Facings may be further heated or baked at elevated temperatures after curing to improve strength or friction properties.

We have made clutch facings from glass fibre yarns produced by conventional textile twisting and plying operations from either continuous glass fibre filaments or from staple glass fibre filaments. Yarns containing continuous glass fibre filaments have relatively tight compact structures with little space between individual filaments and between the twisted bundles of filaments comprising the ply structure of the yarn. Such yarns cannot absorb and retain large quantities of impregnant solutions and, unless the impregnant has a low viscosity, very little penetration of the impregnant into the bundles of filaments occurs. Clutch facings manufactured from such continuous filament based yarns show many loose unimpregnated fibres projecting from the surfaces which have been ground or turned thus making dimensional tolerances difficult to maintain. A further problem is that the preform does not flow well under pressure and fails to fill or flow to the edges of the curing die during the curing operation unless the preform is wound so that it is such a tight fit that it is difficult to insert into the curing die. Continuous filament glass fibre yarns possess much greater strength than staple glass fibre yarns and enable the production of clutch facings of high burst strength (the speed at which the fixing may be rotated before disintegrating under the action of centrifugal forces).

Yarns containing staple glass fibres have bulky structures with relatively large spaces between individual fibres and many fibre ends protrude from the yarn surface. Such yarns can absorb relatively large quantities of impregnant solutions and excessively dilute solutions are not required for penetration into the centre of the yarn. Clutch facing preforms wound from impregnated staple glass fibre yarns produce well filled mouldings with good edges. Adhesion between adjacent yarns is excellent and the facings may be satisfactorily ground or machined. Clutch facings containing staple filament glass fibre yarns are generally of lower strengths than facings containing continuous glass fibre yarns. A further disadvantage of staple glass fibre yarns is that broken fibres fall out of the yarn during impregnation resulting in contamination of the impregnant bath which increases the viscosity of the impregnant and reduces its penetration into the yarn. The atmosphere surrounding the impregnation apparatus also becomes contaminated with these broken fibres, commonly known as 'fly'.

Staple glass fibres are normally tapered and, if broken, short fibres of respirable diameter may be produced thus causing a potential hazard to health. Clutch facings incorporating improved glass yarns with rough or "open" surfaces comprising continuous glass fibre filaments, staple glass fibre filaments or combinations of the two are described in our pending UK patent specification No. 2 039 557 A.

One such yarn has projecting loops where one group of strands is wrapped around another group of strands and the whole yarn overwrapped with a fine thread, loops being produced by overfeeding the wrapping group of strands.

Loop structure yarns are made wholly from continuous filaments and have high strength whilst retaining relatively large quantities of impregnant solutions. Strong clutch facings may be manufactured from such yarns but viscous impregnant solutions are retained in the relatively large loops and surface interstices without penetrating between the closely packed filaments in each strand of the yarn. Two stage impregnation, as described in our pending UK Patent specification No. 2,033,443, where the yarn is first impregnated in a dilute solution of thermosetting resin which can penetrate between individual glass filaments, dried to remove solvent and then reimpregnated with a more viscous solution or dispersion of thermosetting binder cement, is desirable with these yarns to prevent bundles of unimpregnated glass filaments remaining in the yarn and projecting from ground or machined surfaces of facings made from them.

Also the wound preforms must be made a tight fit in the curing die to ensure complete filling of the die during press curing.

Wrapped staple glass fibre yarns are more expensive than continuous filament loop structure yarns and less strong, and also require the two-stage impregnation with binder cement to satisfactorily impregnate the continuous filament core.

We have found that improved yarns for winding clutch facings may be manufactured from textured continuous filament glass fibres and that clutch facings containing such yarns possess improved properties.

Thus, according to the present invention a friction lining includes a fibrous material comprising a continuous filament glass yarn into which overfeed has been introduced, and an impregnant for said fibrous material comprising a thermosetting polymeric material characterised in that said continuous filament glass yarn is a yarn which has been textured to increase its bulk by means of air jet, and the

2

overfeed has been introduced in said texturing, the amount of overfeed retained in said yarn after said texturing being at least 1.5% by weight per unit length of yarn.

The continuous filament glass yarns are textured by the action of a turbulent air jet to produce yarns of increased bulk which possess the relatively high bulk of staple fibre yarns but with higher strength and at reduced cost. In the texturing process one or more strands, each comprising a multitude of parallel, fine continuous glass filaments coated with a size which holds the bundle of filaments together, are passed through a turbulent air jet in which the size coating is broken, allowing the individual filaments to separate from the strand and then become tangled together to produce a relatively open, bulky structure in which individual filaments are no longer parallel to each other. The strands are fed into the texturing jet at a higher speed than that at which they are withdrawn from the jet, the excess material being converted by the turbulent air stream to loops and waves, which become entangled with each other to create the desired bulk. The amount of texture introduced into a yarn may be measured by comparing the weight of a given length of yarn before texturing with the same length of yarn after texturing, the percentage increase in weight of the given length of yarn being called the 'percentage retained overfeed'. A lightly textured yarn, in which the glass filaments are separated from the original strand but remain relatively straight would have a retained overfeed of about 0.5% whereas a heavily textured yarn, in which the filaments lie in wavy paths and are highly entangled to produce a bulky yarn, would have a retained overfeed of over 10%. The retained overfeed can be varied by changing the overfeed applied, air pressure, wind-up tension, in a known manner.

We have impregnated a range of textured glass yarns having different amounts of retained overfeed with a typical binder cement and found that impregnant pickup increases as retained overfeed is increased and, at high levels of pickup, the yarn dries very slowly and cannot be impregnated at economical production rates. In addition, clutch facings made from yarns containing large quantities of impregnants have low burst strengths.

We thus prefer that the yarns used in the present invention have a retained overfeed of no more than 9% and preferably no more than 6%. If desired the strands may be twisted, individually or together, before being subjected to texturing.

Binder impregnant pick-up may be reduced to a lower desired level for a particular yarn by consolidating the yarn by twisting prior to impregnating. The twist required is determined by the bulk and tex of the original textured yarn. As the cost of a twisting operation increases with the twist level and the twist levels required to reduce the pick-up of higher-bulk yarns to acceptable levels tend to render the yarn 'twist lively', necessitating doubling to obtain stability, a further expensive step, we prefer to operate at lower levels of bulk and twist. For example, yarns of about 1800 tex and 3% retained overfeed tend to have impregnant pick-ups of 200—250% by weight which is more than desired in order to produce high burst strength facings. The insertion of 20—80 turns per metre (tpm) reduces this pick-up to the more preferred levels of 180%—80% respectively.

A commonly used concept in the textile industry is that of 'Twist Factor'. This is defined as the product of the twist level (usually in turns per metre) and the square root of the tex. Yarns of different tex having the same twist factor tend to have very similar properties in respect of bulk, liveliness, specific strength etc, and thus tend to behave similarly during impregnation. For air-textured glass yarns with approximately 3% retained overfeed we prefer to operate at twist factors within the range 1000—3000.

We have further found that the addition of metal wires to air textured yarns improves the friction and wear characteristics of clutch facings produced from such yarns, suitable wires being those which have been used in conventional asbestos based clutch yarns e.g. copper, brass, bronze and zinc but wires made of other metals may be used if desired. Metal wires of very small diameters may be added to the glass fibre strands as they pass into the texturing jet but it is more convenient to add the usual thicknesses of wire e.g. about 36 swg as employed in asbestos yarns, during the twisting operation given to the yarn. One or more wires may be added, either as a core to the yarn with the glass distributed around the wire or as a wrapper lying in a helical path around the twisted glass yarn. Impregnant pickup and penetration may be reduced by wrapping the wire around the glass, pickup depending upon the amount of twist in the final yarn and on the tension in the wire; if maximum pickup or penetration is required, wrapper wire tension and yarn twist should be kept to a minimum. Two or more fine wires may be used as wrappers instead of one thicker wire and may be placed side by side or spaced apart, spaced wrappers reduce impregnant pickup compared to side by side wrappers but friction facings made from spaced wrapper yarn show a more uniform distribution of wire in their surfaces. Wire may also be wrapped around a textured glass strand by using a conventional wrapping machine to produce a bound strand comprising an untwisted core of textured glass fibre filaments helically wrapped with one or more wires. The glass core is again consolidated by the action of wrapping it with wire and yarns with satisfactory impregnation characteristics may be manufactured by this process. The wrap frequency of the wire may be higher using this process than by twisting the glass and wire together whilst still maintaining satisfactory impregnation properties e.g. one end of 1800 tex textured glass yarn wrapped at 120 turns per metre gave an impregnant pickup of 135% by weight whereas a satisfactory twisted yarn could not be made at 120 turns per metre through being too twist lively and too tightly consolidated to process properly. A twisted yarn made at 80 turns per metre gave a dope pick-up of only 80% and the dope did not penetrate well into the yarn. Bound strand yarns with opposed helical wire wrappers have been made but dope pick-up is lower than when only one wire is used, e.g. one end of 1800

3

**0 063 453**

tex textured glass yarn bound with two ends of 38 swg brass wire at 120 turns per metre gave a pickup of 89%. Organic fibres may be incorporated into yarns in addition to glass fibres to modify friction, wear and density characteristics of friction facings by (a) passing continuous filament organic fibres and glass fibre strands through the texturing jet to produce a textured yarn in which the fibres are intimately mixed or (b) plying or doubling one or more ends of organic fibre yarns with one or more ends of textured glass fibre yarn, the fibres in the resulting yarn not being as well mixed together as in (a) but staple organic fibres may be added by this method.

Organic fibres which decompose without melting are preferred but heat fusible fibres may be used although fusible fibres may soften or melt during clutch engagements where high temperatures are reached.

The addition of polyester fibres in a wound glass clutch facing containing a textured glass yarn and one end of brass wire was found to reduce friction levels at low temperatures when compared with those obtained from similar yarns containing only the textured glass yarn and brass wire. The friction levels of such facings containing polyester fibres were bound to increase when tested at temperatures in the region 150°C to 250°C, the addition of fusible organic fibres being a useful method of improving the fade resistance of clutch facings containing glass fibres. Certain synthetic fibres, e.g. polyacrylonitrile, can behave either as fusible or infusible fibres depending on the type of polymer and circumstances of use.

Clutch facings containing infusible organic fibres (i.e. fibres which under the influence of heat normally decompose without melting) may be made by adding the infusible organic fibres to the glass fibre yarn or by combining one or more infusible organic fibre yarns with one or more textured glass fibre yarns as the yarns are passing into the impregnating bath. Suitable infusible organic fibres are natural or regenerated cellulose fibres e.g. cotton, jute, hemp, sisal, rayon, phenolic resin fibres and aromatic polyamide or aramid fibres. If the infusible fibre is to be textured with the glass fibre then it must be available as continuous filaments, thus excluding natural staple cellulose fibres which may only be added as yarns during a doubling or plying operation or during the impregnation stage.

We have found the inclusion of infusible organic fibres in textured glass fibre yarn based friction facings to be advantageous, enabling the facing density to be reduced and hence the inertia of the clutch friction plate minimized without producing undesirable effects on strength or performance. If desired, friction levels and fade performance may be modified by the inclusion of suitable quantities of either fusible or infusible organic fibres in the friction facing.

Textured glass fibre yarns containing glass fibres alone, glass fibres and metal wires or glass fibres and organic fibres with or without the addition of metal wires may be used to weave fabrics which, after impregnating with binders, are suitable for use as friction elements in clutches or brake mechanisms. Typical impregnants include solutions of thermosetting resins, elastomers and asphalt or similar pitch like materials and also drying oils.

The proportion of metal wire incorporated into the textured glass yarn may be from 0 to 40% of the total weight of the yarn although we prefer to use proportions of between 5% and 30% of the yarn weight. The incorporation of high proportions of dense metal wires such as copper or brass results in the production of excessively high density facings unless large amounts of organic fibre are also incorporated into the yarn. The proportion of organic fibres incorporated into the textured glass yarn may be from 0 to 100% of the weight of glass present in the yarn, the preferred proportion of heat fusible organic fibres being 1—15% of the weight of glass present in the yarn and the preferred proportion of infusible organic fibres being 10%—67% of the weight of glass present in the yarn.

The invention will now be described by way of example only, in the following Examples:—

Example 1

Relationship between yarn texturing and impregnant pick-up.

Air jet textured glass fibre yarns were manufactured from continuous filament E-glass fibre of 10 micron filament diameter and impregnated with a binder composition as shown in Table I.

4

**0 063 453**

TABLE I

| | Parts by weight |
|---|---|
| Styrene butadiene rubber | 22 |
| Sulphur | 10 |
| Phenol-formaldehyde resin | 3 |
| Carbon black | 18 |
| Barytes | 14 |
| Graphite | 6 |
| Litharge | 23 |
| Trichloroethylene | 257 |

The yarn was impregnated by drawing it through a bath containing the binder, removing excess by pressing it through a doctor consisting of a 3 millimetre wide slot cut into a steel plate and then drying by passing it through a tower in which hot air was circulated, the hot air entering the tower at a temperature of 115°C. The yarn was impregnated at a speed of 1.3 metres per minute and the impregnant pickup determined by weighing 10 metre lengths of dried yarn. The percent pickup (weight picked up based on weight of yarn) for the various yarns is shown below in Table 2.

TABLE 2

| Yarn construction | | Retained overfeed | Pickup |
|---|---|---|---|
| | | % | % |
| 2400 tex textured glass yarn-untwisted | | 8.8 | 355 |
| | | 5.4 | 279 |
| | | 2.8 | 250 |
| | | 2.4 | 202 |
| 2 ends 1200 tex textured glass twisted at | 40 tpm | 3 | 137 |
| One end 1800 tex textured | 28tpm | 3 | 182 |
| glass+1 end 36 swg brass | 68tpm | 3 | 116 |
| as a wrapper | 80tpm | 3 | 80 |
| 2 ends 900 tex textured glass/38 swg brass— glass & brass passed thro' texturing jet together & then the 2 ends twisted at 40 tpm | | 3 | 175 |
| 1800 tex textured glass bound strand wrapped with one end 36 swg brass at 120 tpm | | 3 | 135 |
| 1800 tex textured glass bound strand with 2 opposed helical wrappers of 36 swg brass each at 120 tpm, | | 3 | 89 |

Example 2

One end of 1800 tex air jet textured glass yarn with a retained overfeed of 3% was twisted with one end of 36 swg copper wire as a wrapper to give a twist of 68 turns per metre in the final yarn. Three ends of this yarn were impregnated together as described in Example 1 to given an impregnant pickup of 101% by weight of dry solids. Clutch facings were manufactured by winding annular preforms from the yarn, using a random winding pattern and then press curing the preforms in a suitable die to produce grooved pattern facings. The facings were cured at a temperature of 150°C and a pressure of 2 tons per square inch of facing area for a period of six minutes, "breathing" the press as necessary to prevent blistering of the facing.

5

The press cured facings were then baked for six hours at a temperature of 200°C whilst clamped between two stiff metal plates to prevent distortion and then ground to the desired thickness.

| | |
|---|---|
| Finished facing density | 2.09—2.16 g/ml |
| Burst strength of 8″×5¾″ drilled facings at 200°C | 12000—14000 rpm. |

Example 3

1600 tex glass fibre strand and 250 tex viscose rayon were passed together through an air texturing jet to produce a textured yarn with a retained overfeed of 3% one end of which was twisted with one end of 36 swg brass wire as a wrapper to produce a yarn with a twist of 68 turns per metre. Three ends of yarn were impregnated together as in Example 1, resulting in an impregnant pickup of 103% by weight, clutch facings then being manufactured from this yarn as described in Example 2.

| | |
|---|---|
| Finished facing density | 1.95—2.0 g/ml. |
| Burst strength of 8″×5¾″ drilled facings at 200°C | 11500—12600 rpm |

Example 4

One end of a 1650 tex air jet textured glass yarn with a retained overfeed of 3% was twisted with three ends of 109 tex continuous filament polyester yarn and one end of 36 swg brass wire as a wrapper to produce a yarn with a twist of 50 turns per metre. Three ends of yarn were impregnated together as in Example 1. Resulting in an impregnant pickup of 122% by weight, clutch facings being manufactured from this yarn as described in Example 2.

| | |
|---|---|
| Finished facing density | 1.87—1.94 g/ml |
| Burst strength of 8″×5¾″ drilled facings at 200°C | 12,200—13,400 rpm |

Example 5

One end of 1800 tex air jet textured glass yarn with a retained overfeed of 3% was twisted with four ends of 54 tex 'Kynol' phenolic resin staple fibre yarn and one end of 36 swg brass wire as a wrapper to produce a yarn with a twist of 68 turns per metre. Three ends of this yarn were impregnated together as in Example 1, resulting in an impregnant pickup of 106% by weight, clutch facings being manufactured from this yarn as described in Example 2.

| | |
|---|---|
| Finished facing density | 2.00—2.03 g/ml |
| Burst strength of 8″×5¾″ drilled facing at 200°C | 11500—12100 rpm |

Example 6

One end of 1800 tex air jet textured glass fibre yarn with a retained overfeed of 3% was twisted with one end of 36 swg brass wire as a wrapper to produce a yarn with a twist of 68 turns per metre. Two ends of this yarn and two ends of 500 tex 'Kevlar' aramid staple fibre yarn were impregnated together, as in Example 1, to give an impregnant pickup of 156% by weight. The yarn was then wound into clutch facings and finished as in Example 2.

| | |
|---|---|
| Finished facing density | 1.94—1.98 g/ml |
| Burst strength of 8″×5¾″ drilled facing at 200°C | 13,500—14,200 rpm |

Example 7

One end of 1860 tex air jet textured yarn comprising 71% glass fibre and 29% viscose fibre was twisted at 40 tpm, a 36 swq, copper wire being applied as a wrapper at the twisting stage. Three ends of this yarn were impregnated together as described in Example 1 but using a 2.5 mm wide doctor slot to give an impregnant pickup of 110% by weight. The yarn was then wound into clutch facings and finished as in Example 2.

| | |
|---|---|
| Finished facing density | 1.94—1.98 g/ml |
| Burst strength of 8″×5¾″ drilled facing at 200°C | 10,500—11,500 rpm |

Example 8

A woven fabric was made 11 mm thick and 190 mm wide using a conventional BB L 4-ply combination weave construction (as used normally with asbestos yarns) and a textured continuous filament glass yarn.

The yarn contained 66% by weight of glass, 18% by weight of viscose and 16% by weight of brass and was made as follows:— continuous filament glass fibre and viscose were textured together using an air-jet as before, the textured filaments were then twisted with one end of 0.15 mm diameter brass wire with 32 turns per metre, S. twist, then 4 ends were plied together and twisted with 40 turns per metre, Z twist.

The woven fabric was impregnated with an impregnant solution consisting of a cashew cresol formaldehyde resin dissolved in naphtha, and took up 40% by weight (based on weight of fabric) of impregnant.

(The impregnant solution had a solids yield at 150°C of 75 to 77% by weight, a tube cure-time at 150°C of $8\frac{1}{2}$ to $13\frac{1}{2}$ mins and a viscosity at 25°C of 190 to 220 centipoise).

The impregnant fabric was dried in hot air to remove solvent, rolled to consolidate the material, and then baked in an oven at 230°C to cure the resin. In this case the material was cured as a flat sheet, but it may alternatively be cured as a roll, or around a drum to make curved sheet.

It may be subsequently cut to size, drilled and, particularly in the case of a flat sheet, sprung to the desired diameter of brake lining.

The cured friction lining material had a friction level of 0.6 to 175°C.

**Claims**

1. A friction lining which includes a fibrous material comprising a continuous filament glass yarn into which overfeed has been introduced, and an impregnant for said fibrous material comprising a thermosetting polymeric material characterised in that

said continuous filament glass yarn is a yarn which has been textured to increase its bulk by means of air jet, and the overfeed has been introduced in said texturing, the amount of overfeed retained in said yarn after said texturing being at least 1.5% by weight per unit length of yarn.

2. A friction lining according to claim 1 which comprises a woven material comprising said textured glass yarn.

3. A friction lining according to claim 2 in which said impregnant includes a solution of a resin, or a drying oil.

4. A friction lining according to claim 1 which is in the form of an annular clutch facing of wound construction.

5. A friction lining according to claim 4 in which the impregnant comprises a binder cement which includes a resin and/or an elastomer and one or more fillers.

6. A friction lining according to claim 4 or 5 in which the amount of retained overfeed in the textured continuous filament glass yarn is in the range 1.5% to 9%.

7. A friction lining according to any one of the preceding claims in which the textured continuous filament glass yarn contains also one or more metal wires, of weight not exceeding 40% by weight of the total weight of the yarn.

8. A friction lining according to claim 7 in which the metal wire is a wrapper on the yarn.

9. A friction lining according to claim 8 in which the metal is selected from copper, brass, bronze and zinc.

10. A friction lining according to any one of the preceding claims in which the textured continuous filament glass yarn includes also textile fibres.

11. A friction lining according to claim 10 in which organic fibres in an amount by weight up to the same as the amount of continuous filament glass are incorporated.

12. A friction lining according to claim 11 in which fusible organic fibre in an amount up to 15% by weight (based on the weight of the glass) is incorporated.

13. A friction lining according to claim 11 in which infusible organic fibre in an amount of 10% to 67% of the weight of the glass is incorporated.

**Patentansprüche**

1. Reibbelag, bestehend aus einem Fasermaterial mit einem zusammenhängenden Glas-Endlosfaden oder -Filament, in welchen Überschuß eingebracht worden ist, und mit einem Imprägnierungsmittel für das Fasermaterial, das ein aushärtendes polymeres Material aufweist, dadurch gekennzeichnet, daß der zusammenhängende Glas-Endlosfaden ein Faden ist, welcher mittels eines Luftstrahles texturiert worden ist, um sein Volumen zu erhöhen, daß der Überschuß bei der Texturierung eingebracht worden ist, und daß die Menge des Überschusses, die in dem Garn oder Faden nach der Texturierung zurückbehalten wird, wenigstens 1,5 Gew.-% pro Längeneinheit des Fadens oder Garnes beträgt.

2. Reibbelag nach Anspruch 1, gekennzeichnet durch ein gewebtes Material, welches den texturierten Glasfaden aufweist.

3. Reibbelag nach Anspruch 2, dadurch gekennzeichnet, daß das Imprägnierungsmittel eine Lösung aus einem Harz oder einem Trockenöl aufweist.

4. Reibbelag nach Anspruch 1, dadurch gekennzeichnet, daß er in Form eines ringförmigen Kupplungsbelages mit gedrehtem oder gewundenem Aufbau ausgebildet ist.

5. Reibbelag nach Anspruch 4, dadurch gekennzeichnet, daß das Imprägnierungsmittel einen Binderzement aufweist, welcher ein Harz und/oder ein Elastomeres und einen oder mehrere Füllstoffe enthält.

6. Reibbelag nach Anspruch 4 oder 5, dadurch gekennzeichnet, daß die Menge des zurückbehaltenen Überschusses in dem texturierten zusammenhängenden Glas-Filamentgarn im Bereich von 1,5% bis 9% liegt.

7. Reibbelag nach einem der vorhergehenden Ansprüche, dadurch gekennzeichnet, daß das texturierte zusammenhängende Glas-Filamentgarn auch einen oder mehrere Metalldrähte enthält, deren Gewicht 40 Gew.-% des Gesamtgewichtes des Fadens nicht übersteigt.

8. Reibbelag nach Anspruch 7, dadurch gekennzeichnet, daß der Metalldraht eine Hülle auf dem Garn oder Faden bildet.

9. Reibbelag nach Anspruch 8, dadurch gekennzeichnet, daß das Metall ausgewählt ist aus Kupfer, Messing, Bronze und Zink.

10. Reibbelag nach einem der vorhergehenden Ansprüche, dadurch gekennzeichnet, daß das texturierte zusammenhängende Glas-Filamentgarn auch Textilfasern aufweist.

11. Reibbelag nach Anspruch 10, dadurch gekennzeichnet, daß organische Fasern in einer Gewichtsmenge bis zu der gleichen Menge des zusammenhängenden Glas-Filamentgarn enthalten sind.

12. Reibbelag nach Anspruch 11, dadurch gekennzeichnet, daß schmelzbare organische Fasern in einer Menge bis zu 15 Gew.-% (basierend auf der Menge des Glases) enthalten sind.

13. Reibbelag nach Anspruch 11, dadurch gekennzeichnet, daß un schmelzbare organische Fasern in einer Menge von 10 bis 67% des Gewichtes des Glases enthalten sind.

**Revendications**

1. Garniture de friction comportant un matériau fibreux comprenant un fil de verre à filaments continus dans lequel on a introduit une suralimentation et un agent d'imprégnation dudit matériau fibreux constitué par une matière polymère thermodurcissable caractérisée en ce que ledit fil de verre à filament continu est un fil qu'on a texturé pour en augmenter le volume au moyen de jet d'air et en ce que la suralimentation a été introduite lors de ladite texturation, le pourcentage de retenue de suralimentation dans le fil après ladite texturation étant d'au moins 1,5% en poids par unité de longueur de fil.

2. Garniture de friction selon la revendication 1, caractérisée en ce qu'elle est en un matériau tissé comprenant ledit fil de verre texturé.

3. Garniture de friction selon la revendication 2, caractérisée en ce que ledit agent d'imprégnation comporte une solution d'une résine ou un huile siccative.

4. Garniture de friction selon la revendication 1, caractérisée en ce qu'elle est sous la forme d'une garniture d'embrayage annulaire à structure enroulée.

5. Garniture à friction selon la revendication 4, caractérisée en ce que l'agent d'imprégnation est un ciment liant qui comporte une résine et/ou un élastomère et une ou plusieurs charges.

6. Garniture de friction selon la revendication 4 ou 5, caractérisée en ce que le pourcentage de retenue de suralimentation dans le fil de verre à filaments continus texturé est compris entre 1,5 et 9%.

7. Garniture de friction selon l'une quelconque des revendications précédentes caractérisée en ce que le fil de verre à filaments continus texturé comporte aussi un ou plusieurs fils métalliques, de poids ne dépassant pas 40% du poids total de fil.

8. Garniture de friction selon la revendication 7, caractérisée en ce que le fil métallique constitue une enveloppe sur le fil de verre.

9. Garniture de friction selon la revendication 8, caractérisée en ce que le métal est choisi parmi le cuivre, le laiton, le bronze et le zinc.

10. Garniture de friction selon l'une quelconque des revendications précédentes caractérisée en ce que le fil de verre à filaments continus texturé comporte aussi des fibres textiles.

11. Garniture de friction selon la revendication 10, caractérisée en ce que des fibres organiques lui sont incorporées jusqu'à concurrence d'un pourcentage en poids égal à celui de verre à filaments continus.

12. Garniture à friction selon la revendication 11, caractérisée en ce que de la fibre organique fusible lui est incorporée jusqu'à concurrence de 15% en poids (rapporté au poids de verre).

13. Garniture de friction selon la revendication 11, caractérisée en ce que de la fibre organique infusible lui est incorporée à raison de 10 à 67% du poids de verre.